# EUROPÄISCHE PATENTSCHRIFT

(11) **EP 1 104 619 B1**
(45) Veröffentlichungstag und Bekanntmachung des Hinweises auf die Patenterteilung: **18.05.2005**
(21) Anmeldenummer: 99952278.2
(22) Anmeldetag: 04.08.1999
(51) Int. Cl.: H04M 11/06, H04B 7/24

(54) **VERFAHREN ZUM STEUERN DER DATENÜBERTRAGUNG IN EINEM SCHNURLOSEN V.24- DATENÜBERTRAGUNGSSYSTEM**
METHOD FOR CONTROLLING DATA TRANSMISSION IN A WIRELESS V.24 DATA TRANSMISSION SYSTEM
PROCEDE POUR COMMANDER LA TRANSMISSION DE DONNEES DANS UN SYSTEME DE TRANSMISSION DE DONNEES V.24 SANS FIL

(30) Priorität: 12.08.1998 DE 19836608
(43) Veröffentlichungstag der Anmeldung: 06.06.2001
(73) Patentinhaber: SIEMENS AKTIENGESELLSCHAFT, 80333 München (DE)
(72) Erfinder: BIEDERMANN, Rolf, D-48683 Ahaus (DE); GARCIA ALFARO, Diego, D-22869 Schenefeld (DE)
(86) Internationale Anmeldenummer: PCT/DE1999/002420
(87) Internationale Veröffentlichungsnummer: WO 2000/010293

(56) Entgegenhaltungen:
- WO-A-97/41700
- US-A- 5 142 538

## Beschreibung

Daten-Telekommunikation (Datel) ist das gegenseitige Senden und Empfangen von Daten bzw. Datensignalen (Paketdaten) zwischen einer Datenendeinrichtung - z.B. Personal Computer, Daten-Terminals, DV-Anlagen etc. - und einer fernen Datenendeinrichtung - z.B. Personal Computer, Daten-Terminals, DV-Anlagen etc. - über ein Telekommunikationsnetz, beispielsweise ein öffentliches Telekommunikationsnetz (Stw.: ISDN, PSTN etc.). Damit die von der Datenendeinrichtung gesendeten Daten bzw. Datensignale über das Telekommunikationsnetz übertragen werden können, ist zwischen der Datenendeinrichtung und dem Telekommunikationsnetz eine netztechnische Einrichtung, die sogenannte Datenübertragungseinrichtung, vorgesehen. Die am weitesten verbreitete Datenübertragungseinrichtung ist neben der PC-Karte (früher: PCMCIA-Karte) das Modem (Kunstwort aus Modulator/Demodulator) [vgl. hierzu u.a. das Gebrauchsmuster DE 297 14 588 U1].

Das Modem ist eine auf der Grundlage des Trägerstromverfahrens arbeitende elektrische Datenübertragungseinrichtung für den Einsatz auf analogen Übertragungswegen begrenzter Bandbreite - z.B. Telekommunikationsleitungen (z.B. a/b-Leitungspaar, ISDN-S₀-Bus etc.) des Telekommunikationsnetzes, das digitale Datensignale in analoge Datensignale und umgekehrt umwandelt und überträgt. In Modem's sind ferner eine Vielzahl von durch die International Telecommunication Union - Telecommunication Standards (ITU-T) standardisierte Verfahren der V-Serie implementiert bzw. realisiert.

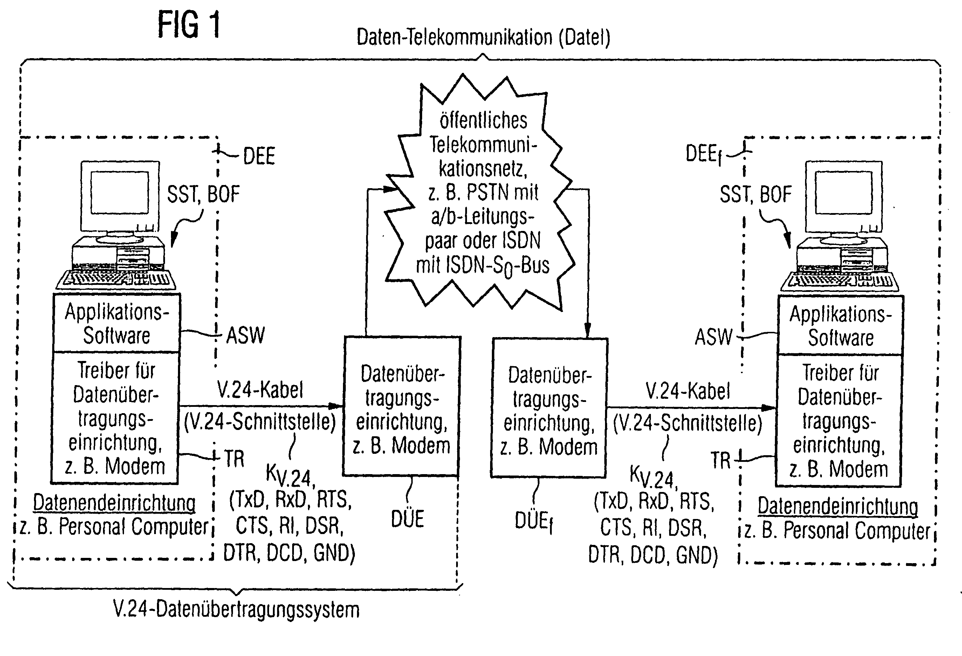

FIGUR 1 zeigt ein Daten-Telekommunikation-Szenario auf der Basis eines V.24-Datenübertragungssystems. Ein V.24-Datenübertragungssystem ist dabei über ein öffentliches - z.B. ein ein a/b-Leitungspaar aufweisendes PSTN (**P**ublic **S**witched **T**elecommuncation **N**etwork) oder ein einen ISDN-S₀-Bus aufweisendes ISDN (**I**ntegrated **S**ervices **D**igital **N**etwork) - Telekommunikationsnetz mit einem fernen V.24-Datenübertragungssystem verbunden. Das V.24-Datenübertragungssystem weist eine z.B. als Personal Computer ausgebildete Datenendeinrichtung DEE und eine z.B. als Modem ausgebildete Datenübertragungseinrichtung DÜE auf, die über ein V.24-Kabel (V.24-Schnittstelle) K_{V.24} miteinander verbunden sind.

In Analogie dazu weist das ferne V.24-Datenübertragungssystem eine z.B. als Personal Computer ausgebildete ferne Datenendeinrichtung DEE_{f} und eine z.B. als Modem ausgebildete ferne Datenübertragungseinrichtung DÜE_{f} auf, die ebenfalls über ein V.24-Kabel (V.24-Schnittstelle) K_{V.24} miteinander verbunden sind.

Die Datenendeinrichtung DEE, DEE_{f} enthält eine Systemsteuerung SST mit Bedienoberfläche BOF, eine Applikationssoftware ASW und einen Treiber TR als Anpassungsglied zwischen Software (Applikationssoftware) und Hardware (Datenübertragungseinrichtung bzw. Modem).

Der Treiber TR ist Modem-Hersteller-spezifisch und vorzugsweise als CAPI-Treiber (**C**ommon ISDN **A**pplication **P**rogrammable **I**nterface; standardisierte Kommunikationsschnittstelle zur Anwendersoftware für die fehlertolerante ISDN-Telekommunikation mit dem Personal Computer) oder als TAPI-Treiber (**T**elephone **A**pplication **P**rogrammable **I**nterface) ausgebildet.

Eine Vielzahl der auf dem Markt erhältlichen Datenübertragungseinrichtungen DÜE, z.B. analoge Modem's und PC-externe ISDN-Terminal Adapter, werden über einen HAYES-Befehlssatz (HAYES-Standard) gesteuert. Der HAYES-Standard ist ursprünglich ein amerikanischer Industrie-Standard für die Modemkommunikation, insbesondere für die Modemsteuerung durch die Datenendeinrichtung DEE gewesen. Er wird auch als AT-Standard bezeichnet, weil fast alle Kommandos des HAYES-Befehlssatzes mit dem Prefix "AT" (**AT**tention) mit den ASCII-Zeichen A und T beginnen. Der inzwischen weltweit eingeführte Standard ist Gegenstand einer ITU-Empfehlung (International Telecommunication Union) mit der Bezeichnung "ITU-T V.25ter". Statt des Prefix "AT" können auch der Prefix "at", der Prefix "A/" oder der Prefix "a/" verwendet werden.

Bei diesen Modem's wechselt der Modem-Treiber TR der Datenendeinrichtung DEE je nach Datenübertragungsphase (z. B. Verbindungsaufbau, Aushandeln der Übertragungsparameter usw.) die Baudrate an der V.24-Schnittstelle. Dieser Wechsel der Baudrate wird über das V.24-Kabel K_{V.24} jedoch nicht mittels einer Signalisierung an die Datenübertragungseinrichtung bzw. das Modem DÜE übertragen. Das Modem DÜE muß die neu eingestellte Baudrate also selbständig erkennen und sich an den Treiber TR anpassen (Autobauding). Als Regel gilt hierbei: die Baudrate, mit der die "AT"-Zeichenfolge übertragen wird, gilt bis zum Empfang der nächsten "AT"-Zeichenfolge.

Dieses Autobauding ist an den Modem's so lange aktiv, bis das Modem nach einem Verbindungsaufbau in den Nutzdatenübertragungsmodus bzw. den sogenannten "Transparent-Modus" übergegangen ist. In diesem Modus besteht eine "Point-To-Point"-Verbindung ("Ende-zu-Ende"-Verbindung) mit der fernen Datenübertragungseinrichtung bzw. dem fernen Modem DÜE_{f}. Das Autobauding wird dann ausgeschaltet, damit "AT"-Zeichenfolgen im Nutzdatenstrom nicht interpretiert werden und eventuell eine nicht gewünschte Baudratenänderung am Modem erfolgt.

Das V.24-Kabel bzw. die V.24-Schnittstelle K_{V.24} unterstützt gemäß der ITU-T Spezifikation V.24, März 1993, Seiten 1 bis 19 den Modembetrieb an einen Personal Computer durch verschiedene Leitungen (Statusleitungen). Dieses sind:
1. Eine Sendedatenleitung TxD für die Datenübertragung,
2. eine Empfangsdatenleitung RxD für die Datenübertragung,
3. eine RTS-Leitung (**R**eady **T**o **S**end) RTS für die Übertragungsart "Hardware-Handshake" zur Übertragung des Zustands "READY TO SEND" (Zustand "RTS"),
4. eine CTS-Leitung (**C**lear **T**o **S**end) CTS für die Übertragungsart "Hardware-Handshake" zur Übertragung des Zustands "CLEAR TO SEND" (Zustand "CTS"),
5. eine RI-Leitung (**R**ing **I**ndication) RI zur Ruferkennung am Modem,
6. eine DSR-Leitung (**D**ATA **S**ET **R**EADY) DSR, auf der das Modem dem Personal Computer meldet, daß es eingeschaltet ist,
7. eine DTR-Leitung (**D**ATA **T**ERMINAL **R**EADY) DTR, auf der der Personal Computer dem Modem meldet, daß er eingeschaltet ist und bereit ist, Verbindungen aufzunehmen,
8. eine DCD-Leitung (**D**ATA **C**HANNEL **D**ETECTION) DCD, auf der das Modem dem Personal Computer meldet, daß es die Verbindung zu einem fernen Modem aufgenommen bzw. aufgebaut hat,
9. eine Masseleitung (**G**rou**ND**) GND.

Weist das V.24-Kabel bzw. die V.24-Schnittstelle K_{V.24} die vorstehend aufgezählten neun Leitungen nicht auf, sondern weniger als neun, z.B. sieben, so kann dieses 7-polige Kabel den Modembetrieb an dem Personal Computer dennoch unterstützen. Dies geschieht dadurch, daß statt des "Hardware-Handshake" auf den RTS/CTS-Leitungen eine Übertragungsart "Software-Handshake" zur Übertragung der Zustände "RTS", "CTS" - z.B. mittels eines XON/XOFF-Protokolls - auf den Sende/Empfangsdatenleitungen TxD, RxD durchgeführt wird. Bei dem "Software-Handshake" werden in der Datenendeinrichtung DEE und der Datenübertragungseinrichtung DÜE der zwischen der Datenendeinrichtung DEE und der Datenübertragungseinrichtung DÜE übertragene Datenstrom analysiert, alle "Software-Handshake-Zeichen" interpretiert und dementsprechend Maßnahmen eingeleitet.

Das in FIGUR 1 dargestellte schnurgebundene V.24-Datenübertragungssystem weist für ein Anwendungsszenario, bei dem die Datenendeinrichtung DEE und die Datenübertragungseinrichtung DÜE räumlich, z.B. über mehrere Meter, voneinander getrennt sind, den Nachteil auf, daß erstens für die Daten-Telekommunikation ein bezüglich der räumlichen Anordnung von Datenendeinrichtung DEE und Datenübertragungseinrichtung DÜE entsprechend langes V.24-Kabel K_{V.24} erforderlich ist und daß zweitens für die Installation des Systems bei derartigen Kabellängen ein großer nicht vernachlässigbarer Aufwand zur Verlegung des Kabels anfällt.

In Analogie zur Schnurlos-Telefonie ist es deshalb wünschenswert und auch vorstellbar, das schnurgebundene V.24-Datenübertragungssystem gemäß FIGUR 1 durch ein schnurloses V.24-Datenübertragungssystem zu ersetzen.

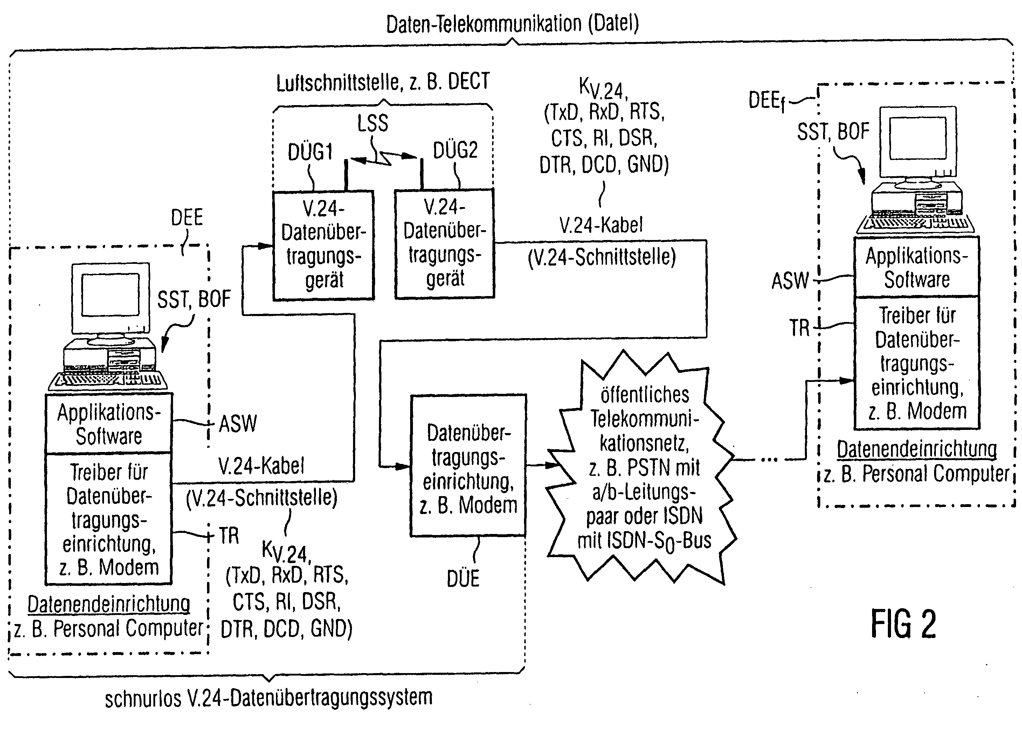

FIGUR 2 zeigt ausgehend von FIGUR 1 ein solches schnurloses V.24-Datenübertragungssystem zur Daten-Telekommunikation. Das in FIGUR 2 nicht vollständig dargestellte ferne V.24-Datenübertragungssystem kann entweder gemäß FIGUR 1 schnurgebunden oder wie das schnurlose V.24-Datenübertragungssystem in FIGUR 2 schnurlos sein. Bei dem schnurlosen V.24-Datenübertragungssystem sind gegenüber dem schnurgebundenen V.24-Datenübertragungssystem in FIGUR 1 das V.24-Kabel bzw. die V.24-Schnittstelle K_{V.24} zwischen der Datenendeinrichtung DEE und der Datenübertragungseinrichtung DÜE aufgetrennt und an den beiden durch die Trennung hervorgerufenen Enden des Kabels jeweils ein Datenübertragungsgerät angeschlossen.

Die beiden Datenübertragungsgeräte, ein mit der Datenendeinrichtung DEE durch das V.24-Kabel bzw. die V.24-Schnittstelle K_{V.24} verbundenes erstes Datenübertragungsgerät DÜG1 und ein mit der Datenübertragungseinrichtung DÜE durch das V.24-Kabel bzw. die V.24-Schnittstelle K_{V.24} verbundenes zweites Datenübertragungsgerät DÜG2, sind durch eine Luftschnittstelle LSS zur drahtlosen Telekommunikation miteinander verbunden.

Luftschnittstellen sind drahtlose Telekommunikationsschnittstellen, bei denen Nachrichten über eine Fernübertragungsstrecke zwischen einer Nachrichtenquelle (z.B. erstes Datenübertragungsgerät DÜG1) und einer Nachrichtensenke (z.B. zweites Datenübertragungsgerät DÜG2) drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT **[D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], GSM [**G**roupe **S**péciale **M**obile oder **G**lobal **S**ystem for **M**obile Communication; vgl. *Informatik Spektrum* 14 *(1991) Juni*, *Nr.* 3, *Berlin, DE; A.Mann: "Der GSM-Standard - Grundlage für digitale europäische Mobilfunknetze*", *Seiten 137 bis 152* **in Verbindung mit** der Publikation *telekom praxis 4*/*1993*, *P.Smolka "GSM-Funkschnittstelle - Elemente und Funktionen*", *Seiten 17 bis* 24], UMTS [vgl. *Funkschau 6*/*98: R.Sietmann "Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] übertragen werden.

In FIGUR 2 ist als Luftschnittstelle LSS vorzugsweise die DECT-Luftschnittstelle vorgesehen. Die DECT-Technologie ist gemäß der Publikation *"Vortrag von A. Elberse, M*. *Barry, G. Fleming zum Thema: "DECT Data Services - DECT in Fixed and Mobile Networks", 17.* /*18. Juni 1996, Hotel Sofitel, Paris; Seiten 1 bis 12 und Zusammenfassung*" wird - ausgehend von der Druckschrift *"Nachrichtentechnik Elektronik 42 (1992) Jan.*/*Feb. Nr. 1, Berlin, DE; U. Pilger "Struktur des DECT-Standards*", *Seiten 23 bis 29* **in Verbindung mit** der ETSI-Publikation *ETS 300175-1...9, Oktober 1992* und den Druckschriften *Components 31 (1993), Heft 6*, *Seiten 215 bis 218; S. Althammer, D. Brückmann: "Hochoptimierte IC's für DECT* *Schnurlostelefone*" und WO 96/38991 (vgl. Figuren 5 und 6 mit der jeweils dazugehörigen Beschreibung) - die prinzipielle Verwendbarkeit der DECT-Technologie (Digital Enhanced Cordless Telecommuncation) für die drahtlose mobile Fernübertragung von Sprach- und/oder Paketdaten geeignet, bei der der Benutzer durch die DECT-Netzzugriffstechnologie in bezug auf die Fernübertragung von Nutzdaten sowohl zum eigenen Netzbetreiber werden kann als auch eine Zugriffsmöglichkeit zu einem übergeordneten Telekommunikationsnetz hat.

Wenn eine V.24 Kabel-Strecke z.B. zwischen einem Personal Computer und einem Modem durch eine schnurlose Datenübertragungsstrecke gemäß den FIGUREN 1 und 2 ersetzt werden soll, dann muß auch das heutzutage bei Modem's übliche Leistungsmerkmal (Feature) "Autobauding" (automatische Baudratenerkennung an der V.24-Schnittstelle) an der schnurlosen Datenübertragungsstrecke angeboten werden, damit die mit einem Modem gelieferten Modemtreiber weiterhin genutzt werden können. Dieses Autobauding ist am Modem jedoch nicht zu jedem Zeitpunkt aktiv, sondern es muß im Nutzdatenübertragungsmodus, dem sogenannten "Transparent-Modus", des Modem's ausgeschaltet werden.

Die der Erfindung zugrundeliegende Aufgabe besteht darin, in einem schnurlosen zwischen einer Datenendeinrichtung und einer Datenübertragungseinrichtung zur Daten-Telekommunikation betriebenen V.24-Datenübertragungssystem das Reaktivieren und Deaktivieren einer Autobauding-Funktion derart zu steuern, daß eine zuverlässige Realisierung der Autobauding-Funktion möglich wird und insbesondere keine Gefahr besteht, daß die Nutzdatenübertragung bis zur Deaktivierung durch die bis dahin aktivierte Autobauding-Funktion verfälscht wird.

Diese Aufgabe wird durch die Merkmale des Patentanspruches 1 gelöst.

Außerdem wird die Aufgabe durch die Merkmale des Patentanspruches 2 gelöst.

Die der Erfindung zugrundeliegende Idee besteht darin, daß in einem schnurlosen zwischen einer Datenendeinrichtung (z.B. einem Personal Computer) und einer Datenübertragungseinrichtung (z.B. einem Modem) zur Daten-Telekommunikation betriebenen V.24-Datenübertragungssystem mit einem mit der Datenendeinrichtung über ein V.24-Kabel verbundenen ersten Datenübertragungsgerät und mit einem mit der Datenübertragungseinrichtung über ein V.24-Kabel verbundenen zweiten Datenübertragungsgerät, die ihrerseits durch drahtlose Telekommunikation über eine Luftschnittstelle verbindbar sind, die in dem ersten Datenübertragungsgerät und in der Datenübertragungseinrichtung aktivierte Autobauding-Funktion zu einem solchen Zeitpunkt, bei dem die Datenübertragungseinrichtung in einem schnurgebundenen V.24-Datenübertragungssystem die Autobauding-Funktion deaktiviert und reaktiviert werden würde, deaktiviert und reaktiviert wird, indem erstens - gemäß Anspruch 1 - eine in dem ersten Datenübertragungsgerät enthaltene Zustandsmaschine die Zustände der Datenübertragungseinrichtung verfolgt und auf den Zustand des Autobauding in dem ersten Datenübertragungsgerät wirkt oder zweitens - gemäß Anspruch 2 - eine in dem zweiten Datenübertragungsgerät enthaltene Zustandsmaschine die Zustände der Datenübertragungseinrichtung verfolgt und auf den Zustand des Autobauding in dem ersten Datenübertragungsgerät wirkt.

Vorteilhafte Weiterbildungen der Erfindung sind in den Unteransprüchen angegeben.

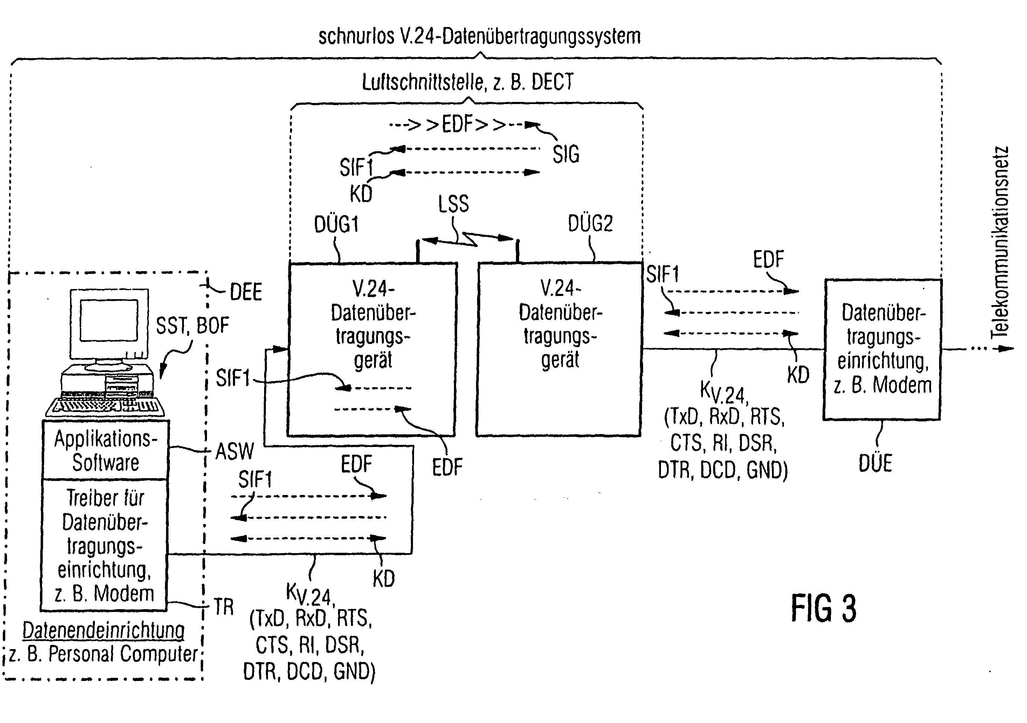

Ein erstes Ausführungsbeispiel der Erfindung wird anhand der FIGUR 3 erläutert.

FIGUR 3 zeigt das schnurlose V.24-Datenübertragungssystem gemäß FIGUR 2, bei dem die Datenübertragung wie folgt gesteuert wird:

Beim Einschalten der Datenendeinrichtung DEE, der Datenübertragungseinrichtung DÜE und den V.24-Datenübertragungsgeräten DÜG1, DÜG2 werden die V.24-Datenübertragungsgeräte DÜG1, DÜG2, die Datenendeinrichtung DEE und die Datenübertragungseinrichtung DÜE in einem Kommandodatenübertragungsmodus betrieben, in dem Kommandodaten KD zwischen der Datenendeinrichtung DEE und der Datenübertragungseinrichtung DÜE bei aktivierter Autobauding-Funktion in der Datenübertragungseinrichtung DÜE übertragen werden.

Die Datenübertragungseinrichtung DÜE geht in einen Nutzdatenübertragungsmodus, wenn der Verbindungsaufbau zu der fernen Datenübertragungseinrichtung DÜE_{f} hergestellt ist.

Mit dem Wechsel der Datenübertragungseinrichtung DÜE von dem Kommandodatenübertragungsmodus in den Nutzdatenübertragungsmodus deaktiviert die Datenübertragungseinrichtung DÜE ihre Autobauding-Funktion und überträgt eine erste Sonderinformation SIF1 zur Datenendeinrichtung DEE, daß der Verbindungsaufbau erfolgt ist.

Das erste V.24-Datenübertragungsgerät DÜG1 überwacht den von der Datenübertragungseinrichtung DÜE zur Datenendeinrichtung DEE übertragenen Datenstrom, geht beim Erkennen der ersten Sonderinformation SIF1 von dem Kommandodatenübertragungsmodus in den Nutzdatenübertragungsmodus und deaktiviert seine Autobauding-Funktion, bevor die Datenendeinrichtung DEE ihrerseits mit dem Empfangen der von dem ersten V.24-Datenübertragungsgerät DÜG1 gesendeten ersten Sonderinformation SIF1 von dem Kommandodatenübertragungsmodus in den Nutzdatenübertragungsmodus geht.

Bei Ende der Nutzdatenübertragung in dem Nutzdatenübertragungsmodus überträgt die Datenendeinrichtung DEE eine ESCAPE-Datenfolge EDF in Richtung der Datenübertragungseinrichtung DÜE und geht als Folge hiervon in den Kommandodatenübertragungsmodus.

Das erste V.24-Datenübertragungsgerät DÜG1 überwacht den von der Datenendeinrichtung DEE zur Datenübertragungseinrichtung DÜE übertragenen Nutzdatenstrom, überträgt beim Erkennen der ESCAPE-Datenfolge EDF diese mittels Signalisierung SIG an das zweite V.24-Datenübertragungsgerät DÜG2, geht von dem Nutzdatenübertragungsmodus in den Kommandodatenübertragungsmodus und reaktiviert als Folge hiervon seine Autobauding-Funktion.

Das zweite V.24-Datenübertragungsgerät DÜG2 überträgt die von dem ersten V.24-Datenübertragungsgerät DÜG1 empfangene ESCAPE-Datenfolge EDF an die Datenübertragungseinrichtung DÜE.

Beim Erkennen der ESCAPE-Datenfolge EDF geht die Datenübertragungseinrichtung DÜE von dem Nutzdatenübertragungsmodus in den Kommandodatenübertragungsmodus und reaktiviert als Folge hiervon ihre Autobauding-Funktion.

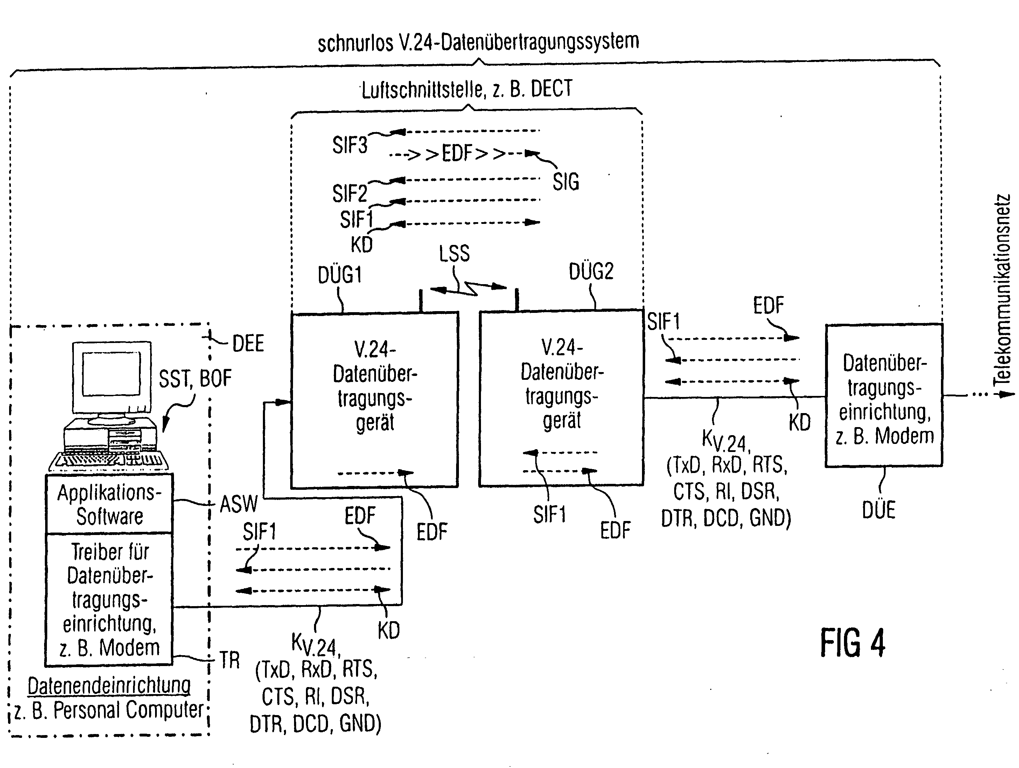

Ein zweites Ausführungsbeispiel der Erfindung wird anhand der FIGUR 4 erläutert.

FIGUR 4 zeigt das schnurlose V.24-Datenübertragungssystem gemäß FIGUR 2, bei dem die Datenübertragung wie folgt gesteuert wird:

Beim Einschalten der Datenendeinrichtung DEE, der Datenübertragungseinrichtung DÜE und den V.24-Datenübertragungsgeräten DÜG1, DÜG2 werden die V.24-Datenübertragungsgeräte DÜG1, DÜG2, die Datenendeinrichtung DEE und die Datenübertragungseinrichtung DÜE in einem Kommandodatenübertragungsmodus betrieben, in dem Kommandodaten KD zwischen der Datenendeinrichtung DEE und der Datenübertragungseinrichtung DÜE bei aktivierter Autobauding-Funktion in der Datenübertragungseinrichtung DÜE übertragen werden.

Die Datenübertragungseinrichtung DÜE geht in einen Nutzdatenübertragungsmodus, wenn der Verbindungsaufbau zu der fernen Datenübertragungseinrichtung DÜE_{f} hergestellt ist.

Mit dem Wechsel der Datenübertragungseinrichtung DÜE von dem Kommandodatenübertragungsmodus in den Nutzdatenübertragungsmodus deaktiviert die Datenübertragungseinrichtung DÜE ihre Autobauding-Funktion und überträgt eine erste Sonderinformation SIF1 zur Datenendeinrichtung DEE, daß der Verbindungsaufbau erfolgt ist.

Das zweite V.24-Datenübertragungsgerät DÜG2 überwacht den von der Datenübertragungseinrichtung DÜE zur Datenendeinrichtung DEE übertragenen Datenstrom und überträgt beim Erkennen der ersten Sonderinformation SIF1 die erste Sonderinformation und eine zweite Sonderinformation SIF2 an das erste V.24-Datenübertragungsgerät DÜG1.

Das erste V.24-Datenübertragungsgerät DÜG1 geht beim Empfang der zweiten Sonderinformation SIF2 von dem Kommandodatenübertragungsmodus in den Nutzdatenübertragungsmodus und deaktiviert seine Autobauding-Funktion, bevor die Datenendeinrichtung DEE ihrerseits mit dem Empfangen der ersten Sonderinformation SIF1 von dem Kommandodatenübertragungsmodus in den Nutzdatenübertragungsmodus geht.

Bei Ende der Nutzdatenübertragung in dem Nutzdatenübertragungsmodus überträgt die Datenendeinrichtung DEE eine ESCAPE-Datenfolge EDF in Richtung der Datenübertragungseinrichtung DÜE und geht als Folge hiervon in den Kommandodatenübertragungsmodus.

Das erste V.24-Datenübertragungsgerät DÜG1 überwacht den von der Datenendeinrichtung DEE zur Datenübertragungseinrichtung DÜE übertragenen Nutzdatenstrom, überträgt beim Erkennen der ESCAPE-Datenfolge EDF diese mittels Signalisierung SIG an das zweite V.24-Datenübertragungsgerät DÜG2.

Das zweite V.24-Datenübertragungsgerät überträgt beim Erkennen der ESCAPE-Datenfolge eine dritte Sonderinformation (SIF3) an das erste V.24-Datenübertragungsgerät DÜG1.

Das erste V.24-Datenübertragungsgerät DÜG1 geht beim Empfang der dritten Sonderinformation SIF3 von dem Nutzdatenübertragungsmodus in den Kommandodatenübertragungsmodus und reaktiviert als Folge hiervon seine Autobauding-Funktion.

Das zweite V.24-Datenübertragungsgerät DÜG2 überträgt die von dem ersten V.24-Datenübertragungsgerät DÜG1 empfangene ESCAPE-Datenfolge EDF an die Datenübertragungseinrichtung DÜE.

Beim Erkennen der ESCAPE-Datenfolge EDF geht die Datenübertragungseinrichtung DÜE von dem Nutzdatenübertragungsmodus in den Kommandodatenübertragungsmodus und reaktiviert als Folge ihre Autobauding-Funktion.

## Patentansprüche

1. Verfahren zum Steuern der Datenübertragung in einem schnurlosen, zwischen einer Datenendeinrichtung und einer Datenübertragungseinrichtung zur Daten-Telekommunikation betriebenen, V.24-Datenübertragungssystem, wobei
das V.24-Datenübertragungssystem ein erstes V.24-Datenübertragungsgerät (DÜG1) und ein zweites V.24-Datenübertragungsgerät (DÜG2) aufweist, die über eine Luftschnittstelle (LSS) miteinander verbunden sind und wobei das erste V.24-Datenübertragungsgerät (DÜG1) mit der Datenendeinrichtung (DEE), das zweite V.24-Datenübertragungsgerät (DÜG2) mit der Datenübertragungseinrichtung (DÜE) und die Datenübertragungseinrichtung (DÜE) mit einer fernen Datenübertragungseinrichtung DÜE_{f}) und mit einer nachgeschalteten fernen Datenendeinrichtung (DEE_{f}) verbunden sind,
mit folgenden Merkmalen:
a) Beim Einschalten der Datenendeinrichtung (DEE), der Datenübertragungseinrichtung (DÜE) und der V.24-Datenübertragungsgeräte (DÜG1, DÜG2) werden die V.24-Datenübertragungsgeräte (DÜG1, DÜG2), die Datenendeinrichtung (DEE) und die Datenübertragungseinrichtung (DÜE) in einem Kommandodatenübertragungsmodus betrieben, in dem Kommandodaten (KD) zwischen der Datenendeinrichtung (DEE) und der Datenübertragungseinrichtung (DÜE) bei aktivierter Autobauding-Funktion in der Datenübertragungseinrichtung (DÜE) übertragen werden,
b) die Datenübertragungseinrichtung (DÜE) geht in einen Nutzdatenübertragungsmodus, wenn der Verbindungsaufbau zu der fernen Datenübertragungseinrichtung (DÜE_{f}) hergestellt ist,
c) mit dem Wechsel der Datenübertragungseinrichtung (DÜE) von dem Kommandodatenübertragungsmodus in den Nutzdatenübertragungsmodus deaktiviert die Datenübertragungseinrichtung (DÜE) ihre Autobauding-Funktion und überträgt eine erste Sonderinformation (SIF1) zur Datenendeinrichtung (DEE), daß der Verbindungsaufbau erfolgt ist,
d) das erste V.24-Datenübertragungsgerät (DÜG1) überwacht den von der Datenübertragungseinrichtung (DÜE) zur Datenendeinrichtung (DEE) übertragenen Datenstrom, geht beim Erkennen der ersten Sonderinformation (SIF1) von dem Kommandodatenübertragungsmodus in den Nutzdatenübertragungsmodus und deaktiviert seine Autobauding-Funktion, bevor die Datenendeinrichtung (DEE) ihrerseits mit dem Empfangen der von dem ersten V.24-Datenübertragungsgerät (DÜG1) gesendeten ersten Sonderinformation (SIF1) von dem Kommandodatenübertragungsmodus in den Nutzdatenübertragungsmodus geht,
e) bei Ende der Nutzdatenübertragung in dem Nutzdatenübertragungsmodus überträgt die Datenendeinrichtung (DEE) eine ESCAPE-Datenfolge (EDF) in Richtung der Datenübertragungseinrichtung (DÜE) und geht als Folge hiervon in den Kommandodatenübertragungsmodus,
f) das erste V.24-Datenübertragungsgerät (DÜG1) überwacht den von der Datenendeinrichtung (DEE) zur Datenübertragungseinrichtung (DÜE) übertragenen Nutzdatenstrom, überträgt beim Erkennen der ESCAPE-Datenfolge (EDF) diese mittels Signalisierung (SIG) an das zweite V.24-Datenübertragungsgerät (DÜG2), geht von dem Nutzdatenübertragungsmodus in den Kommandodatenübertragungsmodus und reaktiviert als Folge hiervon seine Autobauding-Funktion,
g) das zweite V.24-Datenübertragungsgerät (DÜG2) überträgt die von dem ersten V.24-Datenübertragungsgerät (DÜG1) empfangene ESCAPE-Datenfolge (EDF) an die Datenübertragungseinrichtung (DÜE),
h) beim Erkennen der ESCAPE-Datenfolge (EDF) geht die Datenübertragungseinrichtung (DÜE) von dem Nutzdatenübertragungsmodus in den Kommandodatenübertragungsmodus und reaktiviert als Folge hiervon ihre Autobauding-Funktion.

2. Verfahren zum Steuern der Datenübertragung in einem schnurlosen, zwischen einer Datenendeinrichtung und einer Datenübertragungseinrichtung zur Daten-Telekommunikation betriebenen, V.24-Datenübertragungssystem, wobei das V.24-Datenübertragungssystem ein erstes V.24-Datenübertragungsgerät (DÜG1) und ein zweites V.24-Datenübertragungsgerät (DÜG2) aufweist, die über eine Luftschnittstelle (LSS) miteinander verbunden sind und wobei das erste V.24-Datenübertragungsgerät (DÜG1) mit der Datenendeinrichtung (DEE), das zweite V.24-Datenübertragungsgerät (DÜG2) mit der Datenübertragungseinrichtung (DÜE) und die Datenübertragungseinrichtung (DÜE) mit einer fernen Datenübertragungseinrichtung DÜE_{f}) und mit einer nachgeschalteten fernen Datenendeinrichtung (DEE_{f}) verbunden sind,
mit folgenden Merkmalen:
a) Beim Einschalten der Datenendeinrichtung (DEE), der Datenübertragungseinrichtung (DÜE) und der V.24-Datenübertragungsgeräte (DÜG1, DÜG2) werden die V.24-Datenübertragungsgeräte (DÜG1, DÜG2), die Datenendeinrichtung (DEE) und die Datenübertragungseinrichtung (DÜE) in einem Kommandodatenübertragungsmodus betrieben, in dem Kommandodaten (KD) zwischen der Datenendeinrichtung (DEE) und der Datenübertragungseinrichtung (DÜE) bei aktivierter Autobauding-Funktion in der Datenübertragungseinrichtung (DÜE) übertragen werden,
b) die Datenübertragungseinrichtung (DÜE) geht in einen Nutzdatenübertragungsmodus, wenn der Verbindungsaufbau zu der fernen Datenübertragungseinrichtung (DÜE_{f}) hergestellt ist,
c) mit dem Wechsel der Datenübertragungseinrichtung (DÜE) von dem Kommandodatenübertragungsmodus in den Nutzdatenübertragungsmodus deaktiviert die Datenübertragungseinrichtung (DÜE) ihre Autobauding-Funktion und überträgt eine erste Sonderinformation (SIF1) zur Datenendeinrichtung (DEE), daß der Verbindungsaufbau erfolgt ist,
d) das zweite V.24-Datenübertragungsgerät (DÜG2) überwacht den von der Datenübertragungseinrichtung (DÜE) zur Datenendeinrichtung (DEE) übertragenen Datenstrom und überträgt beim Erkennen der ersten Sonderinformation (SIF1) die erste Sonderinformation und eine zweite Sonderinformation (SIF2) an das erste V.24-Datenübertragungsgerät (DÜG1),
e) das erste V.24-Datenübertragungsgerät (DÜG1) geht beim Empfang der zweiten Sonderinformation (SIF2) von dem Kommandodatenübertragungsmodus in den Nutzdatenübertragungsmodus und deaktiviert seine Autobauding-Funktion, bevor die Datenendeinrichtung (DEE) ihrerseits mit dem Empfangen der ersten Sonderinformation (SIF1) von dem Kommandodatenübertragungsmodus in den Nutzdatenübertragungsmodus geht,
f) bei Ende der Nutzdatenübertragung in dem Nutzdatenübertragungsmodus überträgt die Datenendeinrichtung (DEE) eine ESCAPE-Datenfolge (EDF) in Richtung der Datenübertragungseinrichtung (DÜE) und geht als Folge hiervon in den Kommandodatenübertragungsmodus,
/g) das erste-V.24-Datenübertragungsgerät (DÜG1) überwacht den von der Datenendeinrichtung (DEE) zur Datenübertragungseinrichtung (DÜE) übertragenen Nutzdatenstrom, überträgt beim Erkennen der ESCAPE-Datenfolge (EDF) diese mittels Signalisierung (SIG) an das zweite V.24-Datenübertragungsgerät (DÜG2),
h) das zweite V.24-Datenübertragungsgerät überträgt beim Erkennen der ESCAPE-Datenfolge eine dritte Sonderinformation (SIF3) an das erste V.24-Datenübertragungsgerät (DÜG1),
i) das erste V.24-Datenübertragungsgerät (DÜG1) geht beim Empfang der dritten Sonderinformation (SIF3) von dem Nutzdatenübertragungsmodus in den Kommandodatenübertragungsmodus und reaktiviert als Folge hiervon seine Autobauding-Funktion,
j) das zweite V.24-Datenübertragungsgerät (DÜG2)überträgt die von dem ersten V.24-Datenübertragungsgerät (DÜG1) empfangene ESCAPE-Datenfolge (EDF) an die Datenübertragungseinrichtung (DÜE),
k) beim Erkennen der ESCAPE-Datenfolge (EDF) geht die Datenübertragungseinrichtung (DÜE) von dem Nutzdatenübertragungsmodus in den Kommandodatenübertragungsmodus und reaktiviert als Folge ihre Autobauding-Funktion.

3. Verfahren nach Anspruch 1 oder 2, **dadurch gekennzeichnet , daß**
die Kommandodaten Hayes-spezifische Kommandos mit dem Hayes-Prefix "AT (Attention)" sind.

4. Verfahren nach einem der Ansprüche 1 bis 3, **dadurch gekennzeichnet, daß**
ein Modem als Datenübertragungseinrichtung und ein Personal Computer als Datenendeinrichtung verwendet wird.

5. Verfahren nach einem der Ansprüche 1 bis 4, **dadurch gekennzeichnet, daß**
eine DECT-Luftschnittstelle als Luftschnittstelle verwendet wird.

## Claims

1. Method for controlling the data transmission in a cordless V.24 data transmission system operated between a data terminal equipment and a data communication equipment for the purpose of data telecommunication, the V.24 data transmission system exhibiting a first V.24 data transmission device (DTD1) and a second V.24 data transmission device (DTD2) which are connected to one another via an air interface (LSS) and the first V.24 data transmission device (DTD1) being connected to the data terminal equipment (DTE), the second V.24 data transmission device (DTD2) being connected to the data communication equipment (DCE) and the data communication equipment (DCE) being connected to a remote data communication equipment (DCEᵣ) and to a downstream remote data terminal equipment (DTEᵣ), having the following features:
a) when the data terminal equipment (DTE), the data communication equipment (DCE) and the V.24 data transmission device (DTD1, DTD2) are switched on, the V.24 data transmission devices (DTD1, DTD2), the data terminal equipment (DTE) and the data communication equipment (DCE) are operated in an instruction data transmission mode, in which instruction data (KD) are transmitted between the data terminal equipment (DTE) and the data communication equipment (DCE) when the auto-bauding function is activated in the data communication equipment (DCE),
b) the data communication equipment (DCE) goes into a user data transmission mode when the connection set-up to the remote data communication equipment (DCEᵣ) is established,
c) as the data communication equipment (DCE) changes from the instruction data transmission mode into the user data transmission mode, the data communication equipment (DCE) deactivates its auto-bauding function and transmits a first special information item (SIF1) to the data terminal equipment (DTE) to the effect that the connection set-up has taken place,
d) the first V.24 data transmission device (DTD1) monitors the data stream transmitted from the data communication equipment (DCE) to the data terminal equipment (DTE), changes from the instruction data transmission mode to the user data transmission mode when the first special information item (SIF1) is detected and deactivates its auto-bauding function before the data terminal equipment (DTE) in turn changes from the instruction data transmission mode to the user data transmission mode as it receives the first special information item (SIF1) sent by the first V.24 data transmission device (DTD1),
e) at the end of the user data transmission in the user data transmission mode, the data terminal equipment (DTE) transmits an ESCAPE data sequence (EDF) in the direction of the data communication equipment (DCE) and, as a consequence, changes to the instruction data transmission mode,
f) the first V.24 data transmission device (DTD1) monitors the user data stream transmitted from the data terminal equipment (DTE) to the data communication equipment (DCE) and, when it detects the ESCAPE data sequence (EDF), transmits it by means of signalling (SIG) to the second V.24 data transmission device (DTD2), changes from the user data transmission mode to the instruction data transmission mode and, as a consequence, reactivates its auto-bauding function,
g) the second V.24 data transmission device (DTD2) transmits the ESCAPE data sequence (EDF) received from the first V.24 data transmission device (DTD1) to the data communication equipment (DCE).
h) when it detects the ESCAPE data sequence (EDF), the data communication equipment (DCE) changes from the user data transmission mode to the instruction data transmission mode and, as a consequence, reactivates its auto-bauding function.

2. Method for controlling the data transmission in a cordless V.24 data transmission system operated between a data terminal equipment and a data communication equipment for the purpose of data telecommunication, the V.24 data transmission system exhibiting a first V.24 data transmission device (DTD1) and a second V.24 data transmission device (DTD2) which are connected to one another via an air interface (LSS) and the first V.24 data transmission device (DTD1) being connected to the data terminal equipment (DTE), the second V.24 data transmission device (DTD2) being connected to the data communication equipment (DCE) and the data communication equipment (DCE) being connected to a remote data communication equipment (DCEᵣ) and to a downstream remote data terminal equipment (DTEᵣ), having the following features:
a) when the data terminal equipment (DTE), the data communication equipment (DCE) and the V.24 data transmission devices (DTD1, DTD2) are switched on, the V.24 data transmission devices (DTD1, DTD2), the data terminal equipment (DTE) and the data communication equipment (DCE) are operated in an instruction data transmission mode, in which instruction data (KD) are transmitted between the data terminal equipment (DTE) and the data communication equipment (DCE) when the auto-bauding function is activated in the data communication equipment (DCE),
b) the data communication equipment (DCE) goes into a user data transmission mode when the connection set-up to the remote data communication equipment (DCEᵣ) is established,
c) as the data communication equipment (DCE) changes from the instruction data transmission mode into the user data transmission mode, the data communication equipment (DCE) deactivates its auto-bauding function and transmits a first special information item (SIF1) to the data terminal equipment (DTE) to the effect that the connection set-up has taken place,
d) the second V.24 data transmission device (DTD2) monitors the data stream transmitted from the data communication equipment DCE to the data terminal equipment (DTE) and, when it detects the first special information item (SIF1), transmits the first special information item and a second special information item (SIF2) to the first V.24 data transmission device (DTD1),
e) when it receives the second special information item (SIF2), the first V.24 data transmission device (DTD1) changes from the instruction data transmission mode to the user data transmission mode and deactivates its auto-bauding function before the data terminal equipment (DTE), in turn, changes from the instruction data transmission mode to the user data transmission mode as it receives the first special information item (SIF1),
f) at the end of the user data transmission in the user data transmission mode, the data terminal equipment (DTE) transmits an ESCAPE data sequence (EDF) in the direction of the data communication equipment (DCE) and, as a consequence, changes to the instruction data transmission mode,
g) the first V.24 data transmission device (DTD1) monitors the user data stream transmitted from the data terminal equipment (DTE) to the data communication equipment (DCE) and, when it detects the ESCAPE data sequence (EDF), transmits it by means of signalling (SIG) to the second V.24 data transmission device (DTD2),
h) when it detects the ESCAPE data sequence, the second V.24 data transmission device transmits a third special information item (SIF3) to the first V.24 data transmission device (DTD1),
i) when it receives the third special information item (SIF3), the first V.24 data transmission device DTD1 changes from the user data transmission mode to the instruction data transmission mode and, as a consequence, reactivates its auto-bauding function,
j) the second V.24 data transmission device (DTD2) transmits the ESCAPE data sequence (EDF) received from the first V.24 data transmission device (DTD1) to the data communication equipment (DCE),
k) when it detects the ESCAPE data sequence (EDF), the data communication equipment (DCE) changes from the user data transmission mode to the instruction data transmission mode and, as a consequence, reactivates its auto-bauding function.

3. Method according to Claim 1 or 2, **characterized in that** the instruction data are Hayes-related instructions with the Hayes prefix "AT (attention)".

4. Method according to one of Claims 1 to 3, **characterized in that** a modem is used as the data communication equipment and a personal computer is used as the data terminal equipment.

5. Method according to one of Claims 1 to 4, **characterized in that** a DECT air interface is used as the air interface.

## Revendications

1. Procédé pour la commande de la transmission de données dans un système de transmission de données V.24, sans fil, exploité entre un terminal de données et un dispositif de transmission de données pour la télécommunication de données, le système de transmission de données V.24 présentant un premier appareil de transmission de données V.24 (DÜG1) et un second appareil de transmission de données V.24 (DÜG2), qui sont reliés entre eux par une interface aérienne (LSS) et le premier appareil de transmission de données V.24 (DÜG1) étant relié au terminal de données (DEE), le second appareil de transmission de données V.24 (DÜG2) au dispositif de transmission de données (DÜE) et le dispositif de transmission de données (DÜE) à un dispositif de transmission de données (DÜE_{f}) éloigné et à un terminal de données (DEE_{f}) éloigné et monté en aval,
présentant les caractéristiques suivantes :
a) lors de l'enclenchement du terminal de données (DEE), du dispositif de transmission de données (DÜE) et des appareils de transmission de données V.24 (DÜG1, DÜG2), les appareils de transmission de données V.24 (DÜG1, DÜG2), le terminal de données (DEE) et le dispositif de transmission de données (DÜE) sont exploités dans un mode de transmission de données de commande, dans lequel des données de commande (KD) sont transmises entre le terminal de données (DEE) et le dispositif de transmission de données (DÜE) avec la fonction autobauding activée dans le dispositif de transmission de données (DÜE),
b) le dispositif de transmission de données (DÜE) passe dans un mode de transmission de données utiles lorsque l'établissement de liaison est fait avec le dispositif de transmission de données (DÜE_{f}) éloigné,
c) avec le passage du dispositif de transmission de données (DÜE) du mode de transmission de données de commande au mode de transmission de données utiles, le dispositif de transmission de données (DÜE) désactive sa fonction autobauding et transmet une première information spéciale (SIF1) au terminal de données (DEE), que l'établissement de communication est effectué,
d) le premier appareil de transmission de données V.24 (DÜG1) contrôle le flux de données transmis par le dispositif de transmission de données (DÜE) au terminal de données (DEE), passe lors de la reconnaissance de la première information spéciale (SIF1) du mode de transmission de données de commande au mode de transmission de données utiles et désactive sa fonction autobauding avant que le terminal de données (DEE) passe pour sa part du mode de transmission de données de commande au mode de transmission de données utiles avec la réception de la première information spéciale (SIF1) envoyée par le premier appareil de transmission de données V.24 (DÜG1),
e) à la fin de la transmission de données utiles dans le mode de transmission de données utiles, le terminal de données (DEE) transmet une séquence de données ESCAPE (EDF) en direction du dispositif de transmission de données (DÜE) et passe en conséquence dans le mode de transmission de données de commande,
f) le premier appareil de transmission de données V.24 (DÜG1) contrôle le flux de données utiles transmis par le terminal de données (DEE) au dispositif de transmission de données (DÜE), transmet lors de la reconnaissance de la séquence de données ESCAPE (EDF) celle-ci par signalisation (SIG) au second appareil de transmission de données V.24 (DÜG2), passe du mode de transmission de données utiles au mode de transmission de données de commande et réactive en conséquence sa fonction autobauding,
g) le second appareil de transmission de données V.24 (DÜG2) transmet la séquence de données ESCAPE (EDF) reçue du premier appareil de transmission de données V.24 (DÜG1) au dispositif de transmission de données (DÜE),
h) lors de la reconnaissance de la séquence de données ESCAPE (EDF), le dispositif de transmission de données (DÜE) passe du mode de transmission de données utiles au mode de transmission de données de commande et réactive en conséquence sa fonction autobauding.

2. Procédé pour la commande de la transmission de données dans un système de transmission de données V.24, sans fil, exploité entre un terminal de données et un dispositif de transmission de données pour la télécommunication de données, le système de transmission de données V.24 présentant un premier appareil de transmission de données V.24 (DÜG1) et un second appareil de transmission de données V.24 (DÜG2), qui sont reliés entre eux par une interface aérienne (LSS) et le premier appareil de transmission de données V.24 (DÜG1) étant relié au terminal de données (DEE), le second appareil de transmission de données V.24 (DÜG2) au dispositif de transmission de données (DÜE) et le dispositif de transmission de données (DÜE) à un dispositif de transmission de données (DÜE_{f}) éloigné et à un terminal de données (DEE_{f}) éloigné et monté en aval,
présentant les caractéristiques suivantes :
a) lors de l'enclenchement du terminal de données (DEE), du dispositif de transmission de données (DÜE) et des appareils de transmission de données V.24 (DÜG1, DÜG2), les appareils de transmission de données V.24 (DÜG1, DÜG2), le terminal de données (DEE) et le dispositif de transmission de données (DÜE) sont exploités dans un mode de transmission de données de commande, dans lequel des données de commande (KD) sont transmises entre le terminal de données (DEE) et le dispositif de transmission de données (DÜE) avec la fonction autobauding activée dans le dispositif de transmission de données (DÜE),
b) le dispositif de transmission de données (DÜE) passe dans un mode de transmission de données utiles lorsque l'établissement de liaison est fait avec le dispositif de transmission de données (DÜE_{f}) éloigné,
c) avec le passage du dispositif de transmission de données (DÜE) du mode de transmission de données de commande au mode de transmission de données utiles, le dispositif de transmission de données (DÜE) désactive sa fonction autobauding et transmet une première information spéciale (SIF1) au terminal de données (DEE) que l'établissement de liaison est effectué,
d) le second appareil de transmission de données V.24 (DÜG2) contrôle le flux de données transmis du dispositif de transmission de données (DÜE) au terminal de données (DEE) et transmet lors de la reconnaissance de la première information spéciale (SIF1) la première information spéciale et une seconde information spéciale (SIF2) au premier appareil de transmission de données V.24 (DÜG1),
e) le premier appareil de transmission de données V.24 (DÜG1) passe lors de la réception de la seconde information spéciale (SIF2) du mode de transmission de données de commande au mode de transmission de données utiles et désactive sa fonction autobauding avant que le terminal de données (DEE) passe pour sa part avec la réception de la première information spéciale (SIF1) du mode de transmission de données de commande au mode de transmission de données utiles,
f) à la fin de la transmission de données utiles dans le mode de transmission de données utiles, le terminal de données (DEE) transmet une séquence de données ESCAPE (EDF) en direction du dispositif de transmission de données (DÜE) et passe en conséquence dans le mode de transmission de données de commande,
g) le premier appareil de transmission de données V.24 (DÜG1 ) contrôle le flux de données utiles transmis par le terminal de données (DEE) au dispositif de transmission de données (DÜE), transmet lors de la reconnaissance de la séquence de données ESCAPE (EDF) celle-ci par signalisation (SIG) au second appareil de transmission de données V.24 (DÜG2),
h) le second appareil de transmission de données V.24 transmet lors de la reconnaissance de la séquence de données ESCAPE une troisième information spéciale (SIF3) au premier appareil de transmission de données V.24 (DÜG1),
i) le premier appareil de transmission de données V.24 (DÜG1) passe lors de la réception de la troisième information spéciale (SIF3) du mode de transmission de données utiles au mode de transmission de données de commande et réactive en conséquence sa fonction autobauding,
j) le second appareil de transmission de données V.24 (DÜG2) transmet la séquence de données ESCAPE (EDF) reçue du premier appareil de transmission de données V.24 (DÜG1) au dispositif de transmission de données (DÜE),
k) lors de la reconnaissance de la séquence de données ESCAPE (EDF), le dispositif de transmission de données (DÜE) passe du mode de transmission de données utiles au mode de transmission de données de commande et réactive en conséquence sa fonction autobauding.

3. Procédé selon la revendication 1 ou 2, **caractérisé en ce que**
les données de commande sont des instructions spécifiques à Hayes avec le préfixe de Hayes "AT (Attention) ".

4. Procédé selon l'une quelconque des revendications 1 à 3, **caractérisé en ce que**
un modem est utilisé comme dispositif de transmission de données et un ordinateur personnel comme terminal de données.

5. Procédé selon l'une quelconque des revendications 1 à 4, **caractérisé en ce que**
une interface aérienne DECT est utilisée comme interface aérienne.
